Europäisches Patentamt

European Patent Office

Office européen des brevets

(11) Numéro de publication: **0 312 464 B1**

(12) **FASCICULE DE BREVET EUROPEEN**

(45) Date de publication de fascicule du brevet: **14.04.93** (51) Int. Cl.⁵: **H02K 21/38**

(21) Numéro de dépôt: **88402609.7**

(22) Date de dépôt: **14.10.88**

(54) **Machine électrique notamment à entrefers radiaux.**

(30) Priorité: **16.10.87 FR 8714312**

(43) Date de publication de la demande:
**19.04.89 Bulletin 89/16**

(45) Mention de la délivrance du brevet:
**14.04.93 Bulletin 93/15**

(84) Etats contractants désignés:
**BE CH DE ES FR GB GR IT LI LU NL SE**

(56) Documents cités:
EP-A- 0 072 774      CH-A- 521 045
DE-A- 3 001 095      FR-A- 2 362 516
GB-A- 2 069 766      US-A- 3 469 133

**REVUE GENERALE DE L'ELECTRICITE, no. 3, mars 1987, pages 48-52, Paris, FR; J. LUCI-DARME et al.: "Moteurs discoides à reluctance variable et à aimants permanents: des couples spécifiques élevés à faible vitesse"**

(73) Titulaire: **Rossi, Rinaldo Jean Costantino**
**49, avenue Paul Doumer**
**F-75116 Paris(FR)**

(72) Inventeur: **Rossi, Rinaldo Jean Costantino**
**49, avenue Paul Doumer**
**F-75116 Paris(FR)**

(74) Mandataire: **Rinuy, Santarelli**
**14, avenue de la Grande Armée**
**F-75017 Paris (FR)**

Rank Xerox (UK) Business Services
(3.10/3.5x/3.0.1)

## Description

L'invention se rapporte aux machines électriques (moteurs ou alternateurs) constituées d'un rotor coaxial à un stator et libre en rotation par rapport à ce dernier autour d'un axe commun, ce rotor et ce stator étant munis de pôles magnétiques en regard et des moyens inducteurs (bobinages, excitateurs ou récepteurs-alternateurs) et des aimants permanents étant agencés en sorte d'établir une corrélation entre la rotation relative rotor/stator et le courant circulant dans les moyens inducteurs.

On connaît déjà un moteur à rotor discoïdal et aimants permanents à aimantation axiale d'après le document français FR-2.588.132 ; les aimants permanents y sont au moins pour partie portés par le rotor et les moyens inducteurs y sont des bobinages annulaires portés par le stator et coaxiaux à celui-ci, et disposés radialement à l'extérieur des pôles magnétiques.

On connaît également, d'après le document FR-A-2.362.516 (TOKAI RIKA) qui décrit un micromoteur électrique dont l'élément mobile est quasiment massif (d'où une grande inertie) avec des dents polaires radiales imbriquées qui sont délimitées par des petites saignées et dont les polarités alternent au cours du temps ; il y a autant de dents polaires que de pôles aimantés. Les lignes de flux se referment sans traverser aucun aimant.

Le document EP-A-0.072.774 (GÜTTINGER) décrit quant à lui un moteur monophasé, petit et bon marché, mais comportant de nombreux éléments, dont un dispositif d'amortissement et de déphasage de flux engagé dans un creux entre deux couronnes polaires circonférentiellement décalées, d'un côté au moins de la bobine de ce moteur. Ces couronnes sont des pièces en fer doux recourbées en sorte de présenter des dents axiales ; de même des pôles statoriques en fer doux sont disposés longitudinalement sur la face interne d'un aimant unique. La forme et l'épaisseur des pôles ne permet pas le passage de flux importants.

Le document US-A-3.469.133 (STCHERBATCHEFF) propose un moteur à reluctance variable polarisée par un aimant permanent. Celui-ci est annulaire et radialement polarise vers l'axe ; il n'y a ni pôles alternés, ni entrefers associés à cet aimant, et les lignes de flux associées à la bobine ne traversent pas l'aimant.

L'invention vise une machine électrique à très hautes performances, facile et peu coûteuse à fabriquer, et ayant notamment, en régime moteur, un grand couple massique et une faible inertie moyennant des pertes faibles par effet JOULE, tout en assurant, si la machine est polyphasée, un bon découplage magnétique des phases d'un tel moteur.

Elle propose ainsi une machine électrique à au moins une phase comportant un corps mobile admettant un degré de liberté par rapport à un corps fixe, caractérisée en ce qu'elle comporte pour chaque phase :
- un élément mobile en matériau magnétique doux lié au corps mobile et comportant un corps magnétique portant au moins une pluralité de dents polaires identiques disposées en saillie vers le corps fixe perpendiculairement à leurs trajectoires, toutes les dents de cet élément mobile admettant un plan de symétrie perpendiculaire à leurs trajectoires,
- un élément fixe en matériau doux lié au corps fixe et portant, en regard des dents polaires avec lesquelles il détermine un entrefer constant discontinu (e), au moins un barreau magnétique à aimantation permanente périodique lié à un corps magnétique et ayant, en direction de la pluralité de dents et perpendiculairement à l'entrefer, une composante d'aimantation qui varie le long de chaque barreau, de façon périodique selon une période angulaire prédéterminée, en sorte de déterminer des pôles alternés, à raison d'une polaire de pôles par dent polaire,
- et un bobinage inductif unique entourant l'un ou l'autre des corps magnétiques des éléments fixe et mobile, grâce à quoi des lignes de champ peuvent se refermer au travers desdits corps magnétiques en traversant les dents polaires et ledit entrefer constant, le barreau à aimantation permanente, et un second entrefer défini entre les éléments fixe et mobile.

L'association de N machines élémentaires peut constituer ainsi, notamment, un moteur électrique pas à pas, un moteur sans balai à commutation électronique ou un alternateur à N phases.

L'invention s'applique tout particulièrement bien à la robotique, aux asservissements électro-mécaniques à haute performance, aux moteurs pas à pas et par exemple à des moteurs à débattement limité pour la commande de distributeurs de servovalves.

Les principaux avantages de l'invention pour la réalisation de moteurs sont :
- un couple massique très élevé (3 à 10 mN/kg), compte tenu du grand nombre de paires de pôles possible moyennant des pertes par effet joule faibles, dissipées dans le stator de la machine,
- une inertie rotor faible, lorsque l'épaisseur d'une dent ne vaut qu'un tiers à un quart du pas polaire,
- une réalisation pratique ne comportant que des pièces de forme géométrique simple donc d'usinage facile ; le bobinage, étant réduit à une bobine circulaire, ne pose aucun problème de réalisation.

- Il est possible de réaliser des machines dont les phases sont découplées magnétiquement ce qui supprime les problèmes de mutuelles-inductances entre phases, gênantes dans les logiques de commutation de moteurs pas à pas par exemple.
- Il est possible de réaliser des moteurs pas à pas bon marché par moulage du stator et du rotor en ferrite et utilisation d'aimants permanents multipolaires en ferrite.
- Il est possible de réaliser des machines ayant un couple "sans courant" important, ce qui peut être utile dans le cas d'une utilisation en moteur pas à pas.
- A l'opposé, par compensation des "couples sans courant" des différentes phases, ou par l'utilisation de dents rotor inclinées, il est possible de réduire à des valeurs très faibles ce couple parasite.
- Une self-inductance faible puisque les aimants permanents de perméabilité relative proche de 1 (samarium-cobalt, ferrite etc ...) forment l'essentiel de l'entrefer de la machine. Ceci est particulièrement important pour une application en moteur pas à pas.
- Un choix convenable de la largeur de dent par rapport au pas polaire permet l'obtention dans la bobine excitatrice d'un flux dû aux aimants qui est très sinusoïdal. Ceci implique une force électro-motrice dans la bobine avec peu de distorsion harmonique, ce qui est très intéressant dans l'utilisation en alternateur ou en commande micro-pas des moteurs pas à pas.
- Le couple mutuel aimants-bobine peut être quasi-sinusoïdal et linéaire en fonction du courant même pour des courants élevés (peu de saturation magnétique).
- Le rotor de la machine, pouvant être "massif", peut accepter des vitesses de rotation élevées sans dommage mécanique ce qui, associé à un couple massique important, conduit à des puissances massiques très élevées. Ceci étant particulèrement vrai dans la réalisation d'alternateurs embarqués multipolaires à fréquences élevées.
- L'importance du volume occupé par la bobine ne joue que sur la résistance de celle-ci et peut donc être modulé en fonction de l'utilisation de la machine (régime permanent ou impulsionnel).

Selon des dispositions préférées de l'invention, avantageusement combinées :

- l'élément fixe en matériau magnétique doux porte, en regard des dents polaires avec lesquelles il détermine les deux entrefers, deux barreaux magnétiques à aimantation permanente reliés par un corps magnétique, la pluralité de dents polaires de l'élément mobile se décomposant en tout instant en au moins deux séries de dents de même nombre, reliées par un corps magnétique telles qu'à chaque dent d'une série en regard d'un pôle d'un barreau corresponde une dent de l'autre série en regard d'un pôle opposé de l'autre barreau,

- l'élément mobile étant libre en rotation par rapport à l'élément fixe, les barreaux magnétiques à aimantation permanente sont incurvés en sorte de constituer des couronnes au moins partielles,
- les barreaux magnétiques à aimantation permanente sont conformés en couronnes décalées axialement, les lignes de champ magnétique se refermant dans des plans axiaux et le bobinage inductif étant coaxial à l'élément mobile,
- les couronnes à aimantation permanente sont en regard radialement des séries de dents et ont une aimantation radiale,
- les couronnes à aimantation permanente sont en regard axialement des séries de dents, lesquelles sont confondues, ces couronnes ayant une aimantation axiale,
- les barreaux magnétiques à aimantation permanente sont conformés en deux demi-couronnes radialement en regard, les lignes de champ magnétique se refermant dans des plans transversaux et le bobinage inductif étant disposé dans un plan axial,
- les éléments fixe et mobile sont feuilletés transversalement à l'axe de rotation de l'élément mobile,
- l'élément mobile est disposé à l'intérieur de l'élément fixe,
- l'élément mobile est mobile en translation par rapport à l'élément fixe, les barreaux magnétiques à polarité périodique étant parallèles à la trajectoire de cet élément mobile,
- les barreaux et les séries de dents sont disposés de part et d'autre d'un plan de symétrie parallèle à la trajectoire de cet élément mobile,
- les éléments fixe et mobile sont feuilletés parallèlement à la trajectoire de l'élément mobile,
- les barreaux magnétiques sont formés d'aimants à polarités alternées,
- les couronnes rotoriques portent des dents identiques, et ont des diamètres égaux, les couronnes statoriques ayant de même des diamètres égaux,

- chaque couronne statorique à aimantation permanente est formée d'aimants permanents ayant une composante circonférentielle d'aimantation qui est négligeable,
- chaque couronne statorique à aimantation permanente, le long d'une circonférence, une composante circonférentielle d'aimantation non nulle qui varie de façon périodique avec la même période que la composante radiale d'aimantation mais avec un déphasage de $\pi$/2,
- chaque couronne est formée d'aimants dont le vecteur d'aimantation en chaque point forme un angle constant ($\alpha$), au signe près, avec un rayon passant par ce point, et a un module sensiblement constant,
- chaque couronne a, le long d'une circonférence, une aimantation permanente de module constant, dont les composantes radiale et circonférentielle varient approximativement de façon sinusoïdale,
- un espace axial est ménagé entre deux éléments statoriques ou rotoriques voisins associés à des phases électriques différentes,
- chacun des élément rotoriques et statoriques est en deux parties obtenues par moulage,

Des objets, avantages et caractéristiques de la présente invention ressortent de la description qui suit, donnée à titre d'exemple non limitatif, en regard des dessins annexés sur lesquels :

- la figure 1 est une vue schématique partielle en coupe axiale d'une machine électrique polyphasée selon l'invention,
- la figure 2 est une vue de côté d'une des deux carcasses statoriques apparaissant sur la figure 1,
- la figure 3 en est une vue de gauche, selon la flèche III de la figure 2, cette carcasse portant une couronne à aimantation permanente,
- la figure 4 est une vue éclatée en coupe axiale du rotor de la figure 1, selon la ligne IV-IV de la figure 5,
- la figure 5 en est une vue frontale, selon la ligne V-V de la figure 4,
- la figure 6 est une vue schématique partielle de détail illustrant une variante de réalisation de la couronne à aimantation permanente de la figure 3,
- la figure 7 est une vue schématique analogue représentant une autre variante de réalisation, la couronne à aimantation permanente étant aplatie pour la clarté du dessin,
- la figure 8 est une vue schématique partielle en perspective avec coupe transversale d'un moteur rotatif selon un autre mode de réalisation de l'invention,

- la figure 9 est une vue schématique partielle en coupe axiale d'un autre moteur rotatif selon l'invention,
- la figure 10 est une vue de face d'une couronne d'aimants faisant partie du moteur de la figure 9,
- la figure 11 est une vue de face avec coupe partielle du rotor du moteur de la figure 9,
- la figure 12 est une vue schématique partielle en perspective avec coupe longitudinale d'un moteur linéaire selon l'invention, et
- la figure 13 est une variante de la figure 1.

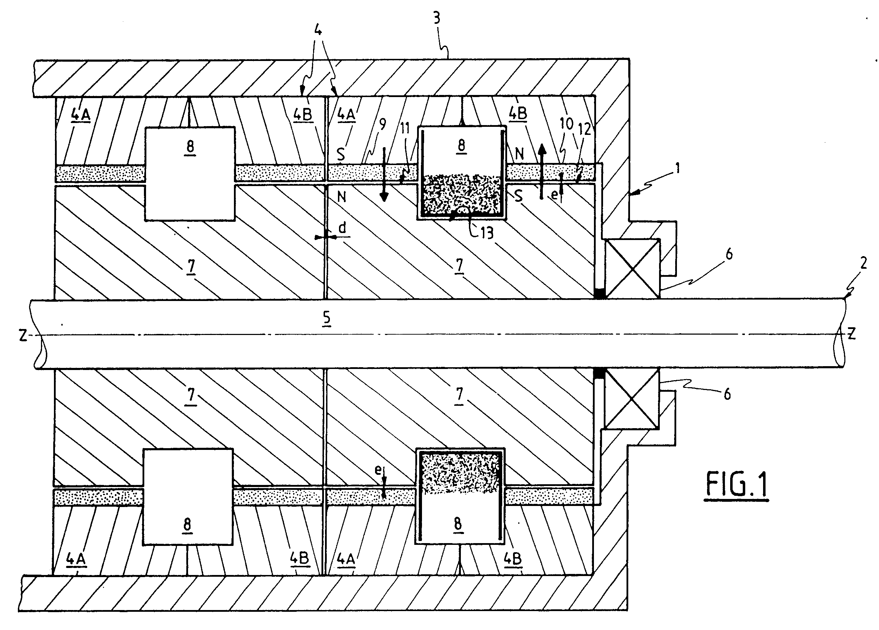

La figure 1 représente schématiquement une machine électrique à plusieurs phases électriques qui comporte, de manière classique, une structure fixe 1 formant stator et un ensemble mobile 2 formant rotor mobile en rotation par rapport au stator par rapport à un axe Z-Z.

Le stator 1 comporte principalement un carter 3 portant intérieurement des éléments statoriques 4 qui seront détaillés plus loin, tandis que le rotor 2 comporte principalement un arbre central 5 guidé en rotation par des paliers 6 de tout type approprié et maintenu axialement par rapport au stator par des éléments classiques de retenue non représentés. Cet arbre central 5 porte de même des éléments rotoriques 7 qui seront détaillés plus loin.

Cette machine comporte en outre des organes inductifs incluant des bobinages 8 connectés par des moyens non représentés à un équipement électrique extérieur de tout type connu approprié.

Selon le mode d'utilisation de la machine, le rotor est entraîné en rotation par rapport au stator sous l'action de courants circulant dans les bobinages (mode moteur électrique) ; à l'inverse, du courant électrique est généré dans les bobinages 8 du fait d'une rotation relative du rotor par rapport au stator.

La machine électrique de la figure 1 est modulaire en ce sens qu'elle comporte autant de modules 4 + 7 qu'il y a de phases électriques N dans cette machine, ces modules identiques étant tels que les rotors sont décalés par rapport aux stators mécaniquement d'un angle $\pi$/n d'une phase à la suivante.

Sur la figure 1 apparaissent deux modules disposés axialement côte à côte, étant précisé que ces modules sont découplés magnétiquement ainsi que cela apparaîtra plus loin. En fait le module de gauche est représenté de manière plus schématique que celui de droite.

L'élément statorique 4 de chaque module comporte une carcasse magnétique munie de deux couronnes magnétiques 9 et 10 en saillie radiale et à aimantation permanente, avec une composante radiale d'aimantation qui varie, le long de la circonférence de ces couronnes, de manière périodique selon une période angulaire prédéterminée en sorte de former une succession annulaire de P paires de pôles magnétique N-S radiaux alternés. En outre les composantes radiales d'aimantation sont de sens opposés en toute paire de points axialement opposés de ces couronnes à aimantation permanente. Ainsi si, dans la partie haute de la figure 1 le flux magnétique circule de haut en bas dans la couronne de gauche 9, il circule de bas en haut dans la couronne de droite 10.

Quant à l'élément rotorique 7 de chaque module, il comporte une carcasse magnétique formée de deux couronnes magnétiques discontinues reliées par un manchon magnétique 13 lié à l'arbre 5 et formées chacune d'une pluralité de D dents polaires 11 et 12 disposées radialement en saillie en regard des couronnes 9 et 10 à aimantation permanente, $\vec{B}$, avec lesquelles elles définissent des entrefers d'épaisseur e. Les pôles sont aimantés transversalement aux trajectoires T des dents.

Chaque module comporte un bobinage inductif 8, annulaire, monté sur le stator coaxialement à celui-ci en étant disposé axialement, pour partie entre les couronnes statoriques 9 et 10 à Oraimantation permanente, et pour partie entre les couronnes discontinues de dents polaires 11 et 12. Ce bobinage est connecté de façon connue à une source de courant alternatif non représentée.

De ce fait, dans toute coupe axiale telle que celle de la figure 1, le flux magnétique circule autour du bobinage 8 au travers d'aimants permanents et d'entrefers, ici disposés axialement de part et d'autre de ce bobinage.

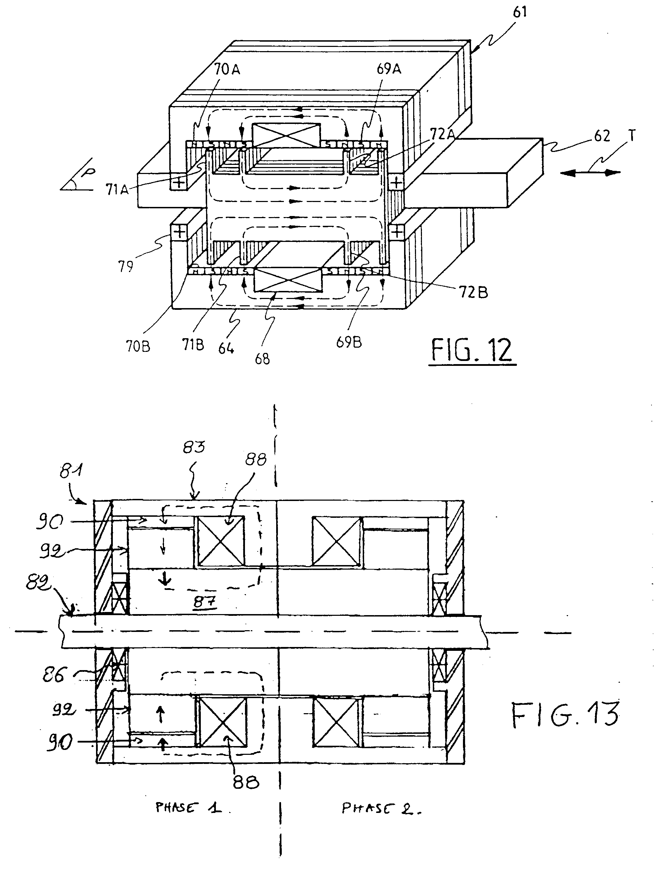

A titre de variante simplifiée, le stator peut porter une seule couronne aimantée 9 ou 10 en regard d'une seule série de dents, l'autre couronne étant remplacée par de la matière magnétique, les espaces existant entre les dents polaires associées étant par ailleurs comblés. Bien que simplifiée, une telle structure offre en substance les avantages de l'invention. Un exemple en est donné à la figure 13 où des éléments analogues à ceux des figures 1 à 5 ont des références qui se déduisent des références de ces figures par addition du nombre 80. Cette figure illustre un moteur rotatif qui, par phase, comporte une seule couronne aimantée 90 et une seule série de dents 92, tandis que l'autre entrefer est continu avec une épaisseur constante entre des éléments statorique 81 et rotorique 87 de matière magnétique douce permettant le retour du flux. Cet entrefer a ici le diamètre du moyeu de l'élément rotorique 87 qui est ainsi très facile à fabriquer, puisqu'il ne présente qu'une couronne en saillie radiale.

Ce mode de réalisation, facile à monter et à réaliser s'applique particulièrement bien à une machine biphasée compacte.

Un espace axial d existe entre les carcasses magnétiques de deux modules voisins grâce à quoi un bon découplage magnétique de ces modules est assuré.

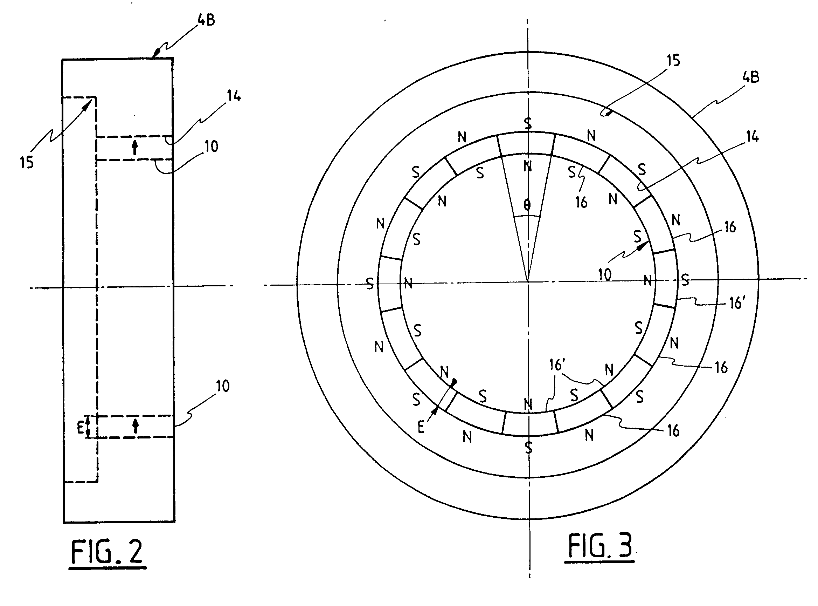

Du point de vue contruction, ainsi qu'il ressort des figures 2 et 3, la carcasse statorique 4 de chaque module est composée de deux demi-carcasses 4A et 4B similaires assujetties dos à dos par tout moyen approprié.

Chaque demi-carcasse a la forme d'un tore comportant en saillie radialement vers l'intérieur une couronne magnétique 14 bordant une demi-gorge 15 devant recevoir le bobinage 8 et destinée à porter, sur sa tranche tournée radialement vers l'axe, la couronne 9 ou 10 précitée.

A la figure 3, la couronne magnétique 10 dont la dimension radiale ou épaisseur est notée E, est formée d'une série annulaire de 2F aimants permanents 16 et 16' à aimantation radiale en forme de tuiles, avec des sens d'aimantation alternés. La composante circonférentielle d'aimantation de ces aimants est négligeable.

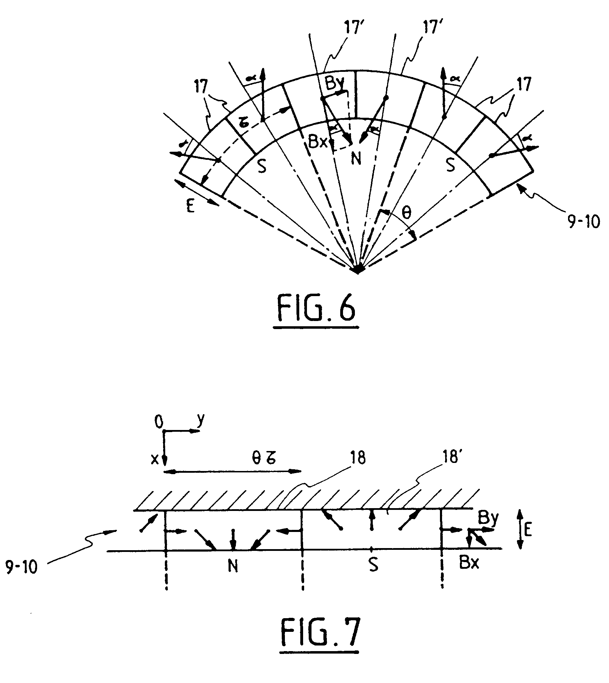

Dans les variantes des figures 6 et 7 les couronnes aimantées 9 ou 10 sont formées de pôles magnétiques ayant une aimantation de module sensiblement constant, avec une composante circonférentielle d'aimantation By non nulle, qui varie de façon périodique avec la même période que Bx mais avec un déphasage de $\pi/2$.

Ainsi à la figure 6 la couronne considérée est formée de paires de tuiles aimantées 17 et 17' ; l'angle que forme le vecteur aimantation en chaque point d'une tuile avec un rayon reliant ce point à l'axe a une valeur donnée entre 0° et 45°, à optimiser en fonction du nombre P de paires de pôles. On obtient ainsi un assemblage régulier de paires de pôles dont chaque pôle comprend deux tuiles aimantées 17 ou 17' disposées tête-bêche et occupant un secteur angulaire $\theta$ égal à $\pi/p$ correspondant à une longueur d'arc $\tau$. Cet assemblage de pôles peut être réalisé en particulier pour $\alpha = 0$, en une seule pièce, avec une magnétisation multipolaire radiale d'un anneau de matériau magnétique dur (samarium-cobalt, ferrite, etc ...). Il peut s'agir par exemple d'aimants su samarium-cobalt du type vendu par SEIKO EPSON CORPORATION sous les références SAM ou SAMLET.

Dans le mode de réalisation de la figure 7, représenté en développé, la couronne aimantée 9 ou 10 est composée de tuiles aimantées 18 et 18' dont les composantes radiales Bx et circonférentielles By d'aimantation varient approximativement de façon sinusoïdale, avec un décalage de $\pi/2$. Un tel type d'aimantation peut être obtenu avec les aimants du type précité-repérés SAM 5 ou SAMLET 3 ou encore des aimants à base de fer et de terres rares tels que vendus par GENERAL MOTORS sous l'appellation MAGNEQUENCH.

Cette carcasse 4 peut être réalisée en matériau magnétique doux (poudre de fer agglomérée, ou association de tôle feuillettées ou encore en ferrite moulée). Le choix du matériau dépend bien sûr de l'intensité du flux qui doit circuler dans le stator pour chaque phase.

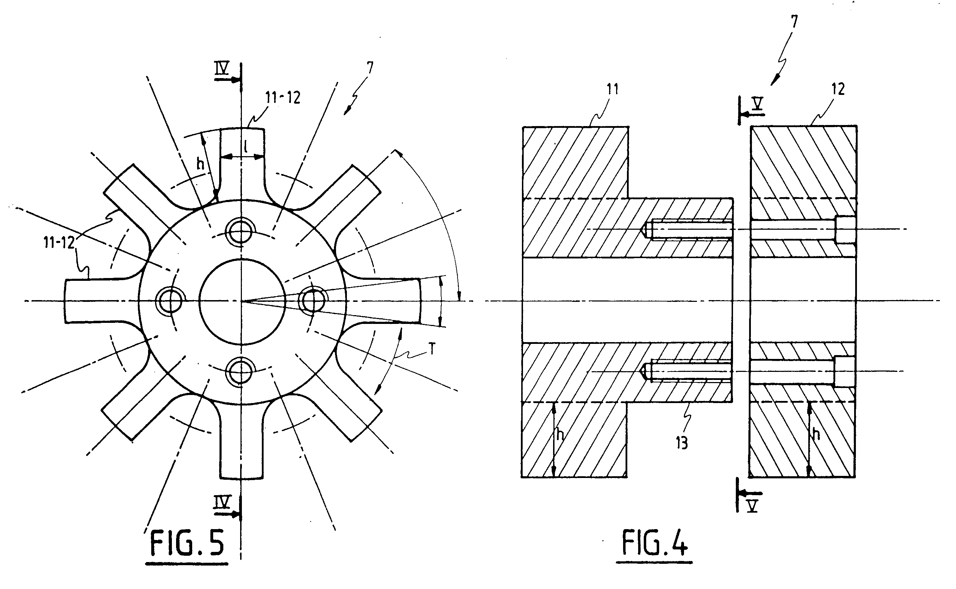

Quant à la structure de construction de l'élément rotorique 7, elle ressort des figures 4 et 5. Cet élément est en deux parties dissymétriques, une partie comportant la couronne discontinue de dents 11 et le manchon 13 et une partie portant la couronne discontinue de dents 12. Ces dents polaires régulièrement réparties du point de vue angulaire sont ici identiques, avec une dimension radiale h appelée hauteur et une dimension circonférentielle I appelée largeur. En fait la forme géométrique des dents est peut critique. Ces parties 11 + 13 et 12 sont assujetties l'une à l'autres par tout moyen approprié, ici des vis qui pénètrent dans le manchon 13 et dont les têtes sont logées dans la partie portant les dents 12.

Ces parties sont en un matériau magnétique doux, poudre de fer agglomérée ou en une association de tôles feuilletées ou en ferrite moulée.

Le nombre D des dents de chaque couronne est ici égal au nombre P de paires de pôles, c'est-à-dire 8 dans l'exemple considéré.

Les dents du rotor et les polarités des aimants des deux demi-carcasses 4A et 4B sont positionnées de telle façon que le potentiel magnétique des aimants en regard des pôles du rotor s'ajoutent et que le flux magnétique ainsi créé par les aimants à travers la bobine 8 varie quasi sinusoïdalement en fonction de la position angulaire du rotor par rapport au stator.

Une largeur I de dent de rotor comprise entre 0,25 et 0,35 du pas polaire $2\tau$ permet d'obtenir un flux à travers la bobine quasi sinusoïdal.

D'autre part, il et possible d'incliner les pôles du rotor par rapport à l'axe de celui-ci de façon à annuler certains harmoniques du couple de maintien dû aux aimants en l'absence de courant dans la bobine (technique analogue au vrillage des encoches dans les moteurs électriques classiques). Un résultat analogue peut être obtenu en inclinant des pôles aimantés du stator par rapport à l'axe du moteur. Par exemple pour un moteur biphasé, les deux phases étant décalées de $\frac{\pi}{2}$ radians électriques ($\frac{\pi}{2P}$ radian mécanique), l'harmonique 2 du couple de maintien sans courant s'annule naturellement et l'harmonique 4 est doublé. Il est possible d'annuler cet harmonique 4 en inclinant les pôles du rotor d'un angle $\frac{\pi}{2P}$ par rapport à l'axe de celui-ci. Il faut noter que l'harmonique 1 du couple de maintien sans courant est nul et que les autres harmoniques impairs sont très faibles.

Le choix de la largeur 1 des dents du rotor par rapport au pas polaire permet de privilégier l'harmonique 2 ou 4 du couple de maintien sans courant. Pour un rapport 1($2\tau$) de l'ordre de 0,4, on observe plutôt de l'harmonique 2 et pour un rapport de 0,25 à 0,35 plutôt de l'harmonique 4.

Le choix de l'épaisseur E de l'aimant par rapport au pas polaire $2\tau$ n'est pas critique et dépend de l'application. Cependant on choisira $\frac{\tau}{E}$ compris entre 3 et 6 pour avoir des performances optimum.

Le choix de l'angle $\alpha$ qui définit l'axe de l'aimantation par rapport au rayon permet d'optimiser le flux capté par les pôles du rotor. Une valeur de 20° à 30° pour $\alpha$ semble optimum. De plus pour $\simeq$ 30° l'harmonique 4 du couple sans courant est très faible en choisissant correctement la largeur de dent ($1/(2\tau)\approx0,33$), ce qui peut être intéressant pour une machine biphasée.

L'idéal serait d'obtenir une orientation de l'aimantation des aimants "sinusoïdale" (conformément à la figure 7) qui donne un couple sans courant ne comportant que de l'harmonique 2 et un flux capté par la bobine quasiment sans distorsion harmonique et de forte valeur.

La hauteur de la dent du rotor h est au moins égale à $\tau$.

L'entrefer e entre les aimants et les dents du rotor devra être réduit au minimum compatible avec les contraintes de réalisation mécanique. On prendra e ≤ 0,15 mm si possible. L'influence défavorable de l'entrefer est d'autant plus notable que l'épaisseur des aimants est faible (machine de petite dimension ou à grand nombre de paires de pôles).

Les parties en matériau magnétique doux peuvent être fabriquées par moulage de matériau à base de poudre de fer du genre COROVAC EF 606 ou en ferrite pour des machines de performances moindres mais plus économiques, ou encore par association de tôles feuilletées.

Les aimants permanents peuvent être réalisés en une seule pièce par moulage et aimantation multipolaire, ou par collage de tuiles aimantées sur les carcasses statoriques.

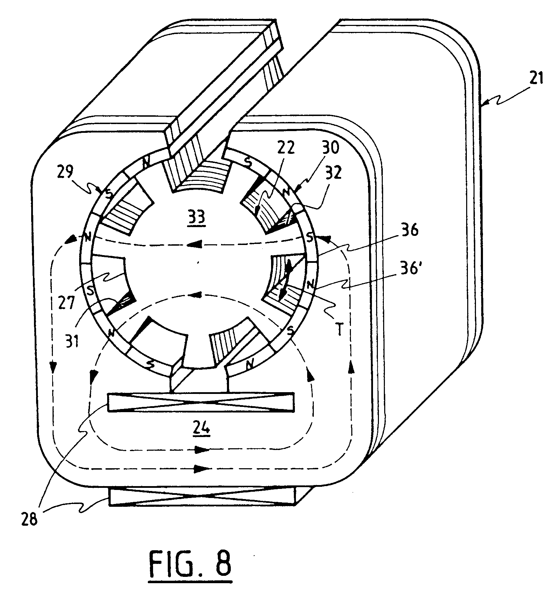

Les figures 8 à 12 présentent des variantes de réalisation d'une phase de machine électrique présentant également les avantages de l'invention.

La figure 8, sur laquelle des éléments analogues à ceux des figures 1 à 5 portent des numéros de référence s'en déduisent après addition du nombre 20, présente ainsi une phase de moteur dans laquelle les flux magnétiques se referment dans des plans transversaux au travers de séries semi-annulaires 29 et 30 disjointes formées d'aimants 36 et 36′ à aimantation radiale. Ces séries d'aimants forment deux barreaux incurvés déterminant un conduit cylindrique dans lequel est situé le rotor 27 comportant à tout instant des nombres égaux de dents 31-32 en regard de l'un et l'autre de ces barreaux. Ces dents sont disposées de telle sorte qu'à chaque dent en regard d'un pôle Nord (ou Sud) de l'un des barreaux correspond une dent en regard d'un pôle Sud (ou Nord) de l'autre barreau, ce qui permet une circulation approximativement radiale du flux magnétique au travers du rotor. Ces barreaux 29 et 30 sont reliés au travers d'un corps 24 en matériau magnétique doux engagé à l'intérieur d'un bobinage inductif 28 disposé dans un plan axial.

Pour réduire les pertes magnétiques, le rotor 22 et le stator 21 sont feuilletés perpendiculairement à l'axe du moteur.

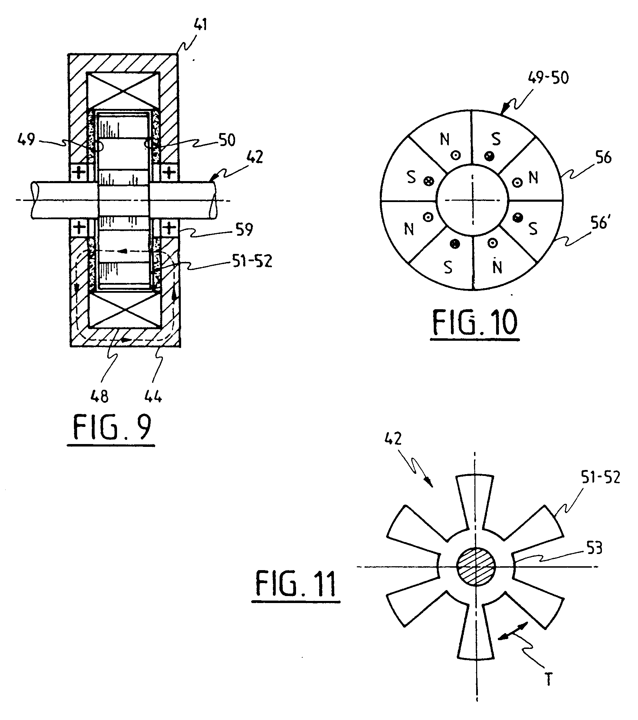

Le moteur électrique des figures 9 à 11 sur lesquelles les éléments analogues à ceux des figures 1 à 5 portent des références qui s'en déduisent par addition du nombre 40 présentent des couronnes aimantées 49 et 50 à aimantation axiale, en regard axialement d'une couronne de dents 51-52 qui sont traversées axialement par les flux magnétiques et dont chacune est à la fois en regard d'un pôle Sud de l'une des couronnes et en regard d'un pôle Nord de l'autre couronne.

Des roulements 59 sont ici représentés.

Enfin le moteur linéaire de la figure 12 où des éléments analogues ont des références qui se déduisent de celles des figures 1 à 5 par addition du nombre 60, se distingue du moteur rotatif de la figure 1 par le fait que les couronnes aimantés 9 et 10 sont remplacées par des barreaux longitudinaux 69A-69B et 70A et 70B. De plus les dents polaires sont ici constituées, de part et d'autre d'un plan horizontal P contenant la trajectoire T de l'élément mobile en translation 62 coulissant sur des paliers 79, de deux paires 71A et 71B, et 72A et 72B.

Ce moteur admet ici un plan horizontal de symétrie mais il faut comprendre que les dents et les aimants de la partie supérieure (ou inférieure) peuvent être supprimés : les éléments A et les éléments B sont redondants.

Les mêmes variantes qu'aux figures 6 et 7 peuvent s'appliquer à ces moteurs des figures 8, 9 et 12.

Dans les variantes des figures 8 et suivantes, on appréciera qu'on peut, dans des versions très simplifiées, ne faire intervenir qu'un seul barreau ou couronne magnétique.

On appréciera que selon l'invention les dents polaires sont de forme massive, ce qui les rend compatibles avec les niveaux de flux des aimants permanents en regard (ces derniers sont choisis parmi les matériaux à hautes performances) : leur section, sensiblement constante, permet la circulation du flux des bobines et des aimants sans saturation.

Ces dents présentent le même calage angulaire par rapport aux pôles du stator à un multiple entier de $\pi$ /p près (si p est le nombre de paires de pôles).

Les pôles alternés jouent le même rôle vis à vis de toutes les dents polaires en regard d'un même barreau.

Les diverses relations dimensionnelles énoncées ci-dessus sont avantageusement, mais pas nécessairement, combinées.

## Revendications

1. Machine électrique à au moins une phase comportant un corps mobile admettant un degré de liberté par rapport à un corps fixe, caractérisée en ce qu'elle comporte pour chaque phase :

    - un élément mobile (2, 22, 42, 62) en matériau magnétique doux lié au corps mobile et portant au moins une pluralité de dents polaires identiques (11, 12 ; 31, 32 ; 51, 52 ; 71, 72) disposées en saillie vers le corps fixe perpendiculairement à leurs trajectoires (T), toutes les dents de cet élément mobile admettant un plan de symétrie perpendiculaire à leurs trajectoires.

    - un élément fixe (1, 21, 41, 61) en matériau magnétique doux lié au corps fixe et portant, en regard des dents polaires avec lesquelles il détermine un entrefer constant discontinu (e), au moins un barreau magnétique (9, 10 ; 29, 30 ; 49, 50 ; 69, 70) à aimantation permanente périodique lié par un corps magnétique (4, 24, 44, 64) et ayant, en direction de la pluralité de dents, et perpendiculairement à l'entrefer, une composante d'aimantation qui varie le long du barreau, de façon périodique selon une période angulaire prédéterminée, en sorte de déterminer des pôles alternés, à raison d'une paire de pôles par dent polaire,

    - et un bobinage inductif unique (8, 28, 48, 68) entourant l'un des corps magnétiques (4, 24, 44, 64 ; 13, 33, 53, 73) des éléments fixe et mobile,

    grâce à quoi des lignes de champ peuvent se refermer au travers desdits corps en traversant les dents polaires et ledit entrefer constant, le barreau à aimantation permanente, ainsi qu'un second entrefer défini entre les éléments fixe et mobile.

2. Machine selon la revendication 1, caractérisée en ce que l'élément fixe (1, 21, 41, 61) en matériau magnétique doux porte, en regard des dents polaires avec lesquelles il détermine les deux entrefers, deux barreaux magnétiques à aimantation permanente reliés par le corps magnétique, la pluralité de dents polaires de l'élément mobile se décomposant en tout instant en au moins deux séries (11, 12 ; 31, 32 ;

51, 52 ; 71, 72) de dents de même nombre, reliées par un corps magnétique (13, 33, 53, 73), telles qu'à chaque dent d'une série en regard d'un pôle barreau corresponde une dent de l'autre série en regard d'un pôle opposé de l'autre barreau.

3. Machine selon la revendication 2, caractérisée en ce que, l'élément mobile (2, 22, 42) étant libre en rotation par rapport à l'élément fixe (1, 21, 42), les barreaux magnétiques à aimantation permanente sont incurvés en sorte de constituer des couronnes au moins partielles.

4. Machine selon la revendication 3, caractérisée en ce que les barreaux magnétiques à aimantation permanente (9, 10 ; 49, 50) sont conformés en couronnes décalées axialement, les lignes de champ magnétique se refermant dans des plans axiaux et le bobinage inductif étant coaxial à l'élément mobile.

5. Machine selon la revendication 4, caractérisée en ce que ces couronnes à aimantation permanente (9, 10) sont en regard radialement des séries (11, 12) de dents et ont une aimantation radiale.

6. Machine selon la revendication 4, caractérisée en ce que ces couronnes à aimantation permanente (49, 50) sont en regard axialement des séries de dents (51-52), lesquelles sont confondues, ces couronnes ayant une aimantation axiale.

7. Machine selon la revendication 3, caractérisé en ce ces barreaux magnétiques à aimantation permanente (29,30) sont conformées en deux demi-couronnes radialement en regard, les lignes de champ magnétique se refermant dans des plans transversaux et le bobinage inductif étant disposé dans un plan axial.

8. Machine selon la revendication 7, caractérisée en ce que les éléments fixe et mobile sont feuilletés transversalement à l'axe de rotation de l'élément mobile.

9. Machine selon l'une quelconque des revendications 3 à 8, caractérisée en ce que l'élément mobile est disposé à l'intérieur de l'élément fixe.

10. Machine selon la revendication 1 ou la revendication 2, caractérisée en ce que l'élément mobile (62) est mobile en translation par rapport à l'élément fixe, les barreaux magnétiques (69, 70) étant parallèles à la trajectoire de cet élément mobile.

11. Machine selon la revendication 10, caractérisée en ce que qu'elle comporte des barreaux et des séries de dents disposés de part et d'autre d'un plan de symétrie parallèle à la trajectoire de cet élément mobile.

12. Machine selon la revendication 10 ou la revendication 11, caractérisée en ce que les éléments fixe et mobile sont feuilletés perpendiculairement à la trajectoire de l'élément mobile.

13. Machine selon la revendication 1, caractérisée en ce que l'élément mobile comporte une seule série de dents par phase, ledit second entrefer étant continu et d'épaisseur constante.

14. Machine selon l'une quelconque des revendications 1 à 13, caractérisée en ce que les barreaux magnétiques sont formés d'aimants (16, 16′) à polarités alternées.

15. Machine selon l'une quelconque des revendications 1 à 14, caractérisée en ce que chaque barreau à aimantation permanente (9, 10) est formé d'aimants permanents (16, 16′) ayant une composante longitudinale d'aimantation $(B_y)$ qui est négligeable.

16. Machine selon l'une quelconque des revendications 1 à 14, caractérisée en ce que chaque barreau à aimantation permanente (9, 10, 17, 17′ ; 18, 18′) a, le long de sa longueur, une composante longitudinale d'aimantation $(B_y)$ non nulle qui varie de façon périodique avec la même période que la composante transversale principale d'aimantation mais avec un déphasage de $\pi/2$.

17. Machine selon la revendication 16, caractérisée en ce que chaque barreau est formé d'aimants (17, 17′) dont le vecteur d'aimantation en chaque point forme un angle constant $(\alpha)$, au signe près, avec une normale passant par ce point, et a un module sensiblement constant.

18. Machine selon la revendication 16, caractérisée en ce que chaque couronne a, le long d'une circonférence, une aimantation permanente de module constant, dont les composantes radiale et circonférentielle varient approximativement de façon sinusoïdale.

19. Machine selon l'une quelconque des revendication 1 à 18, caractérisée en ce qu'un espace axial (d) est ménagé entre deux éléments statoriques ou rotoriques voisins associés à des phases électriques différentes.

20. Machine selon l'une quelconque des revendications 1 à 19, caractérisée en ce que les dents polaires (11, 12) de l'élément mobile ont une hauteur (h) au moins égale à la longueur ($\tau$) de chaque pôle du barreau aimanté (9, 10) en regard tandis que sa largeur (1) est comprise entre 0,25 et 0, 35 de la longueur ($2\tau$) de chaque paire de pôles, l'épaisseur radiale (E) de chaque barreau aimanté (9, 10) étant comprise entre 1/3 et 1/6 de la longueur ($2\tau$) de chaque paire de pôles.

**Claims**

1. An electrical machine of at least one phase, comprising a movable body having one degree of freedom with respect to a fixed body, characterised in that it includes for each phase:
   - a movable element (2, 22, 42, 62) of soft magnetic material, connected to the movable body and carrying at least a plurality of identical polar teeth (11, 12; 31, 32; 51, 52; 71, 72) projecting towards the fixed body at right angles to their trajectories of movement (T), with all the teeth of the said movable element having a plane of symmetry at right angles to their trajectories,
   - a fixed element (1, 21, 41, 61) of soft magnetic material, connected to the fixed body and carrying, in facing relationship to the polar teeth, with which it defines a constant, discontinuous air gap (e), at least one bar magnet (9, 10; 29, 30; 49, 50; 69, 70) having periodic permanent magnetisation and connected by a magnet body (4, 24, 44, 64) and having, towards the plurality of teeth and at right angles to the air gap, a magnetising component which varies along the bar magnet in a periodic manner according to a predetermined angular period, so as to define alternating poles in which there is one pair of poles to each polar tooth,
   - and a single inductive winding (8, 28, 48, 68) surrounding one of the magnetic bodies (4, 24, 44, 64; 13, 33, 53, 73) of the fixed and movable elements, whereby field lines can be closed across the said bodies by passing through the polar teeth and the said constant air gap, the permanently magnetised bar, and a second air gap which is defined between the fixed and movable elements.

2. A machine according to claim 1, characterised in that the fixed element (1, 21, 41, 61) of soft magnetic material carries, in facing relationship with the polar teeth, with which it defines the two air gaps, two permanently magnetised bar magnets joined together by the magnetic body, the plurality of polar teeth of the movable element being divided at any instant into at least two series (11, 12; 31, 32; 51, 52; 71, 72) of teeth, with the same number of teeth in each series, joined by a magnetic body (13, 33, 53, 73) such that, to each tooth in one series facing towards a pole of a bar magnet, there corresponds one tooth of the other series facing towards an opposite pole of the other bar magnet.

3. A machine according to Claim 2, characterised in that, the movable element (2, 22, 42) being free to rotate with respect to the fixed element (1, 21, 42), the permanently magnetised bar magnets are curved inwardly so as to constitute at least partial crowns.

4. A machine according to Claim 3, characterised in that the permanently magnetised bar magnets (9, 10; 49, 50) are configured as axially offset crowns, the magnetic field lines being closed in axial planes and the inductive winding being coaxial with the movable element.

5. A machine according to Claim 4, characterised in that the said permanently magnetised crowns (9, 10) are in radial facing relationship with the series (11, 12) of teeth, and are magnetised radially.

6. A machine according to Claim 4, characterised in that the said permanently magnetised crowns (49, 50) are in axial facing relationship with the series of teeth (51 - 52), which are one and the same, the said crowns being magnetised axially.

7. A machine according to Claim 3, characterised in that the said permanently magnetised bar magnets (29, 30) are configured in two semi-crowns in radial facing relationship, the magnetic field lines being closed in transverse planes and the inductive winding being disposed in an axial plane.

8. A machine according to Claim 7, characterised in that the fixed and movable elements are laminated transversely to the axis of rotation of the movable element.

9. A machine according to any one of Claims 3 to 8, characterised in that the movable element is disposed inside the fixed element.

10. A machine according to Claim 1 or Claim 2, characterised in that the movable element (62) is movable in straight line displacement with respect to the fixed element, the bar magnets (69, 70) being parallel to the trajectory of movement of the said movable element.

11. A machine according to Claim 10, characterised in that it includes bars and series of teeth disposed on either side of a plane of symmetry parallel to the trajectory of movement of the said movable element.

12. A machine according to Claim 10 or Claim 11, characterised in that the fixed and movable elements are laminated at right angles to the trajectory of movement of the movable element.

13. A machine according to Claim 1, characterised in that the movable element includes a single series of teeth for each phase, the said second air gap being continuous and of constant thickness.

14. A machine according to any one of Claim 1 to 13, characterised in that the bar magnets comprise magnets (16, 16') of alternate polarities.

15. A machine according to any one of Claims 1 to 14, characterised in that each permanently magnetised bar (9, 10) comprises permanent magnets (16, 16') having a longitudinal component of magnetisation (By) which is negligible.

16. A machine according to any one of Claims 1 to 14, characterised in that each permanently magnetised bar magnet ( 9, 10, 17, 17'; 18, 18') has along its length a longitudinal component of magnetisation (By) which is greater than zero and which varies in a periodic manner having the same period as the principal transverse component of magnetisation, but out of phase by $\pi/2$.

17. A machine according to Claim 16, characterised in that each bar magnet comprises magnets (17, 17') the magnetisation vector of which defines at each point a constant angle ($\alpha$), ignoring the sign, with a normal passing through the said point, and has a substantially constant modulus.

18. A machine according to Claim 16, characterised in that each crown is permanently magnetised, along a circumference, with a constant modulus, the radial and circumferential components of which vary approximately sinusoidally.

19. A machine according to any one of Claims 1 to 18, characterised in that an axial space (d) is defined between two adjacent stator or rotor elements associated with different electrical phases.

20. A machine according to any one of Claims 1 to 19, characterised in that the polar teeth (11, 12) of the movable element have a height (h) which is at least equal to the length ($\tau$) of each pole of the bar magnet (9, 10) in facing relationship with it, while its width (1) lies between 0.25 and 0.35 times the length ($2\tau$) of each pair of poles, the radial thickness (E) of each bar magnet (9, 10) lying between 1/3 and 1/6 of the length ($2\tau$) of each pair of poles.

**Patentansprüche**

1. Elektrische Maschine für mindestens eine Phase, mit einem beweglichen Körper, der einen Freiheitsgrad bezüglich eines feststehenden Körpers zuläßt, **dadurch gekennzeichnet,** daß sie für jede Phase umfaßt:
   - ein bewegliches Element (2, 22, 42, 62) aus weichmagnetischem Material, das mit dem beweglichen Körper verbunden ist und zumindest eine Vielzahl von identischen Polzähnen (11, 12; 31, 32; 51, 52; 71, 72) trägt, die gegen den festen Körper vorspringend und senkrecht zu ihren Bahnen (T) angeordnet sind, wobei alle Zähne dieses beweglichen Elementes eine Symmetrieebene zulassen, die senkrecht zu ihren Bahnen verläuft,
   - ein feststehendes Element (1, 21, 41, 61) aus weichmagnetischem Material, das mit dem feststehenden Körper verbunden ist und den Polzähnen gegenüberliegend, mit denen es einen konstanten, diskontinuierlichen Spalt (e) festlegt, wenigstens einen Stabmagnet (9, 10; 29, 30; 49, 50; 69, 70) mit periodischer Dauermagnetisierung trägt, der über einen magnetischen Körper (4, 24, 44, 64) befestigt ist und in Richtung der Vielzahl der Zähne sowie senkrecht zum Spalt eine Magnetisierungskomponente aufweist, die längs des Stabes derart periodisch gemäß einer vorgegebenen Winkelperiode variiert, daß im Verhältnis von einem Polpaar pro Polzahn Wechselpole festgelegt werden,

- sowie eine einzige induktive Spule (8, 28, 48, 68), die einen der magnetischen Körper (4, 24, 44, 64; 13, 33, 53, 73) des feststehenden und des beweglichen Elementes umgibt,

wodurch sich Feldlinien quer durch diese Körper schließen können, welche die Polzähne und den besagten konstanten Spalt, den dauermagnetischen Stab sowie einen zweiten, zwischen dem feststehenden und dem beweglichen Element festgelegten Spalt durchlaufen.

2. Maschine nach Anspruch 1, dadurch gekennzeichnet, daß das feststehende Element (1, 21, 41, 61) aus weichmagnetischem Material gegenüber den Polzähnen, mit denen es die zwei Spalte festlegt, zwei Stabmagnete mit Dauermagnetisierung trägt, die durch den magnetischen Körper verbunden sind, wobei sich die Vielzahl der Polzähne des beweglichen Elementes zu jedem Augenblick in wenigstens zwei Reihen (11, 12; 31, 32; 51, 52; 71, 72) mit derselben Anzahl an Zähnen aufgliedert, die durch einen magnetischen Körper (13, 33, 53, 73) so verbunden sind, daß jedem Zahn einer Reihe, der einem Pol eines Stabes gegenüberliegt, ein Zahn der anderen Reihe entspricht, der einem entgegengesetzten Pol des anderen Stabes gegenüberliegt.

3. Maschine nach Anspruch 2, dadurch gekennzeichnet, daß die Stabmagnete mit Dauermagnetisierung so gebogen sind, daß sie zumindest Teilkränze ausbilden, wobei das bewegliche Element (2, 22, 42) in bezug auf das feststehende Element (1, 21, 41) frei drehbar ist.

4. Maschine nach Anspruch 3, dadurch gekennzeichnet, daß die Stabmagnete mit Dauermagnetisierung (9, 10; 49, 50) aus axial versetzten Kränzen gebildet sind, wobei die Linien des Magnetfeldes sich in Axialebenen schließen und die induktive Spule koaxial zum beweglichen Element liegt.

5. Maschine nach Anspruch 4, dadurch gekennzeichnet, daß diese Kränze mit Dauermagnetisierung (9, 10) radial gegenüber den Zahnreihen (11, 12) liegen und eine radiale Magnetisierung aufweisen.

6. Maschine nach Anspruch 4, dadurch gekennzeichnet, daß diese Kränze mit Dauermagnetisierung (49, 50) axial gegenüber zusammengebauten Zahnreihen (51-52) liegen, wobei diese Kränze eine axiale Magnetisierung aufweisen.

7. Maschine nach Anspruch 3, dadurch gekennzeichnet, daß diese Stabmagnete mit Dauermagnetisierung (29, 30) aus zwei einander radial gegenüberliegenden Halbkränzen gebildet sind, wobei die Linien des Magnetfeldes sich in querliegenden Ebenen schließen und die induktive Spule in einer Axialebene angeordnet ist.

8. Maschine nach Anspruch 7, dadurch gekennzeichnet, daß das feststehende und das bewegliche Element quer zur Rotationsachse des beweglichen Elementes geblecht sind.

9. Maschine nach einem der vorhergehenden Ansprüche 3 bis 8, dadurch gekennzeichnet, daß das bewegliche Element im Inneren des feststehenden Elementes angeordnet ist.

10. Maschine nach Anspruch 1 oder nach Anspruch 2, dadurch gekennzeichnet, daß das bewegliche Element (62) in bezug auf das feststehende Element querbeweglich angeordnet ist, wobei die Stabmagnete (69, 70) parallel zur Bahn dieses beweglichen Elementes verlaufen.

11. Maschine nach Anspruch 10, dadurch gekennzeichnet, daß sie Stäbe und Zahnreihen beidseits einer parallel zur Bahn dieses beweglichen Elementes verlaufenden Symmetrieebene aufweist.

12. Maschine nach Anspruch 10 oder nach Anspruch 11, dadurch gekennzeichnet, daß das feststehende und das bewegliche Element senkrecht zur Bahn des beweglichen Elementes geblecht sind.

13. Maschine nach Anspruch 1, dadurch gekennzeichnet, daß das bewegliche Element eine einzige Zahnreihe pro Phase aufweist, wobei der besagte zweite Spalt kontinuierlich ausgebildet und von konstanter Dicke ist.

14. Maschine nach einem der Ansprüche 1 bis 13, dadurch gekennzeichnet, daß die Stabmagnete aus Magneten (16, 16') mit wechselnder Polarität gebildet sind.

15. Maschine nach einem der Ansprüche 1 bis 14, dadurch gekennzeichnet, daß jeder Stab mit Dauermagnetisierung (9, 10) aus Dauermagneten (16, 16') gebildet ist, die in Längsrichtung eine vernachlässigbare Magnetisierungskomponente (By) aufweisen.

16. Maschine nach einem der Ansprüche 1 bis 14, dadurch gekennzeichnet, daß jeder Stab mit Dauermagnetisierung (9, 10, 17, 17'; 18, 18') entlang seiner Länge eine von Null verschiedene Magnetisierungskomponente (By) in Längsrichtung aufweist, die periodisch mit derselben Periode wie die Haupt-Magnetisierungskomponente in Querrichtung, aber mit einer Phasenverschiebung von $\pi/2$, variiert.

17. Maschine nach Anspruch 16, dadurch gekennzeichnet, daß jeder Stab aus Magneten (17, 17') gebildet ist, deren Magnetisierungsvektor in jedem Punkt einen konstanten Winkel ($\alpha$), abgesehen vom Vorzeichen, mit einer durch diesen Punkt verlaufenden Normalen bildet und einen im wesentlichen konstanten Modul aufweist.

18. Maschine nach Anspruch 16, dadurch gekennzeichnet, daß jeder Kranz längs eines Umfanges eine Dauermagnetisierung mit konstantem Modul aufweist, bei der die Radial- und die Umfangskomponente näherungsweise sinusförmig variieren.

19. Maschine nach einem der Ansprüche 1 bis 18, dadurch gekennzeichnet, daß ein Axialspalt (d) zwischen zwei benachbarten Stator- oder Rotorelementen, die an unterschiedliche elektrische Phasen angeschlossen sind, ausgebildet ist.

20. Maschine nach einem der Ansprüche 1 bis 19, dadurch gekennzeichnet, daß die Polzähne (11, 12) des beweglichen Elementes eine Höhe (h) aufweisen, die wenigstens gleich der Länge ($\tau$) jedes Pols des gegenüberliegenden Stabmagneten (9, 10) ist, während ihre Breite (1) im Bereich von 0,25 bis 0,35 der Länge (2$\tau$) jedes Polpaares liegt, wobei die radiale Dicke (E) jedes Stabmagneten (9, 10) im Bereich von 1/3 bis 1/6 der Länge (2$\tau$) jedes Polpaares liegt.

FIG.1

FIG. 3

FIG. 2

FIG.5

FIG.4

FIG.6

FIG.7

## FIG. 8

FIG. 9

FIG. 10

FIG. 11

FIG.12

FIG.13

PHASE 1.          PHASE 2.